# EUROPEAN PATENT APPLICATION

(11) **EP 1 562 307 A1**
(43) Date of publication of application: **10.08.2005**
(21) Application number: 03730812.9
(22) Date of filing: 03.06.2003
(51) Int. Cl.: H04B 7/08

(54) **COMMUNICATION DEVICE**

(30) Priority: 24.10.2002 JP 2002309830
(71) Applicant: MATSUSHITA ELECTRIC INDUSTRIAL CO., LTD., Kadoma-shi, Osaka 571-8501 (JP)
(72) Inventor: TAKEMOTO, Makoto, Yokohama-shi, Kanagawa 222-0011 (JP); IMAMURA, Daichi, Yokosuka-shi, Kanagawa 239-0843 (JP); SUDO, Hiroaki, Yokohama-shi, Kanagawa 224-0045 (JP)
(74) Representative: Pautex Schneider, Nicole
(86) International application number: PCT/JP2003/007041
(87) International publication number: WO 2004/038957

(57) **Abstract**

It is an object of the invention to provide a communication apparatus that can perform gain control without deteriorating an S/N ratio of signals after diversity processing. A communication apparatus according to the invention includes: a comparison unit (11) that compares gain set values calculated and outputted by AGC control units (10a) and (10b) of respective branches; and conversion units (1004a) and (1004b) that generate gain adjustment signals corresponding to the respective branches from the gain set values obtained by the comparison unit (11). The communication apparatus performs gain control for variable gain amplifiers (5a) and (5b) of the respective branches according to the gain adjustment signals from the conversion units (1004a) and (1004b).

## Description

### <Technical Field>

The present invention relates to a communication apparatus that performs gain control without deteriorating an S/N ratio of signals after diversity processing.

### <Background Art>

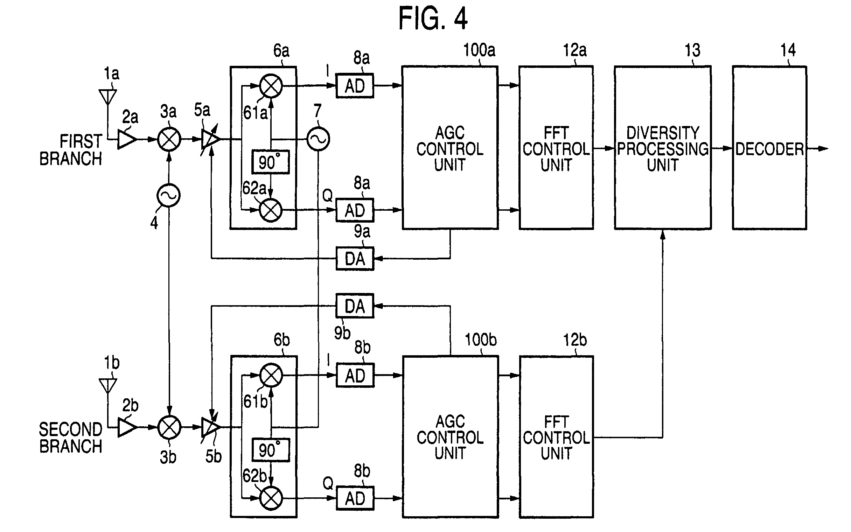

Fig. 4 shows a structure of a related communication apparatus. The related communication apparatus shown in the figure has a diversity structure formed by two branches, a first branch and a second branch, and adopts an OFDM (Orthogonal Frequency Division Multiplexing) system as a multiplexing system. Note that, in Fig. 4, a sign "a" is affixed to components belonging to the first branch and a sign "b" is affixed to components belonging to the second branch. Components shared by the first branch and the second branch will be hereinafter collectively represented. For example, antennas 1 a and 1b are collectively represented as antennas 1.

In the respective branches included in the related communication apparatus, signals received by the antennas 1 are amplified by LNAs (Law Noise Amplifiers) 2 and, then, converted into signals of frequencies of differences between frequencies of the signals and local oscillation frequencies (intermediate frequencies) by mixers 3. The signals subjected to the frequency conversion are controlled to have fixed output levels by variable gain amplifiers 5 and subjected to quadrature demodulation by quadrature demodulators 6. Base band signals of an I component (an in-phase component) and base band signals of a Q component (a quadrature component), which are obtained as a result of the quadrature demodulation, are subjected to AD conversion by AD converters 8, respectively and, then, inputted to FFT (fast Fourier Transform) control units 12 via AGC processing units 100. The respective base band signals are converted into frequency components by the FFT control unit 12 and inputted to a diversity processing unit 13. Then, signals of the frequency components outputted from the FFT control units 12 of the respective branches are inputted to the diversity processing unit 13 shared by the branches

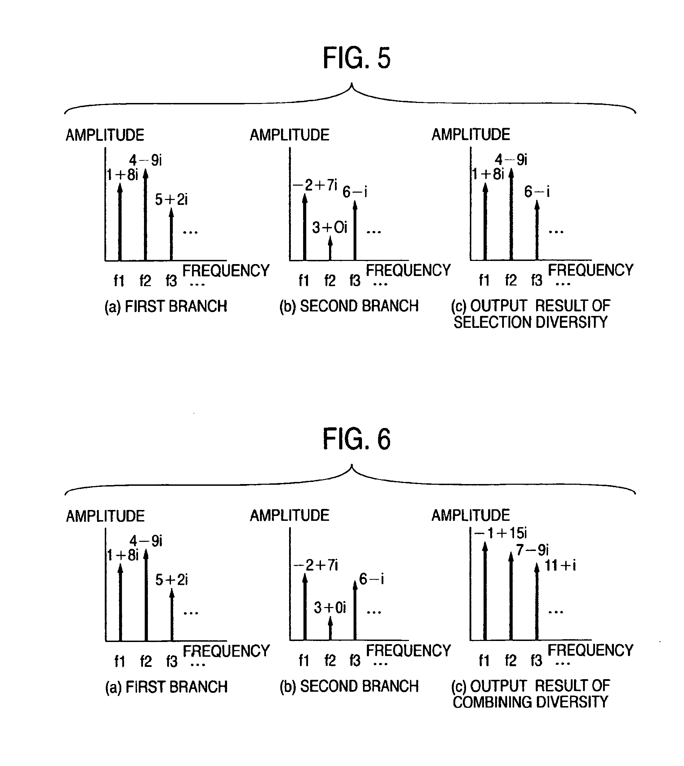

The diversity processing unit 13 compares signals from the respective branches for each frequency and performs processing such as selection diversity for selecting a maximum amplitude for each frequency and combining diversity for performing vector synthesis for each frequency. Fig. 5 shows an example of the selection diversity. When complex signal components of the first branch are 1+8i, 4-9i, and 5+2i and complex signal components of the second branch are -2+7i, 3+0i, and 6-i at frequencies f1, f2, and f3, the diversity processing unit 13 compares the amplitudes in the first branch and the second branch and selects complex signal components having larger amplitudes. In this case, outputs of the diversity processing unit 13 are 1+8i, 4-9i, and 6-i at the frequencies f1, f2, and f3.

Fig. 6 shows an example of the combining diversity. As in Fig. 5, when complex signal components of the first branch are 1+8i, 4-9i, and 5+2i and complex signal components of the second branch are -2+7i, 3+0i, and 6-i at the frequencies f1, f2, and f3, the diversity processing unit 13 subjects signals of the first branch and the second branch to vector synthesis. In this case, outputs of the diversity processing unit 13 are -1+15i, 7-9i, and 11+i at the frequencies f1, f2, and f3. The respective signals subjected to the diversity processing by the diversity processing unit 13 in this way are inputted to a decoder 14 shared by the branches and decoded.

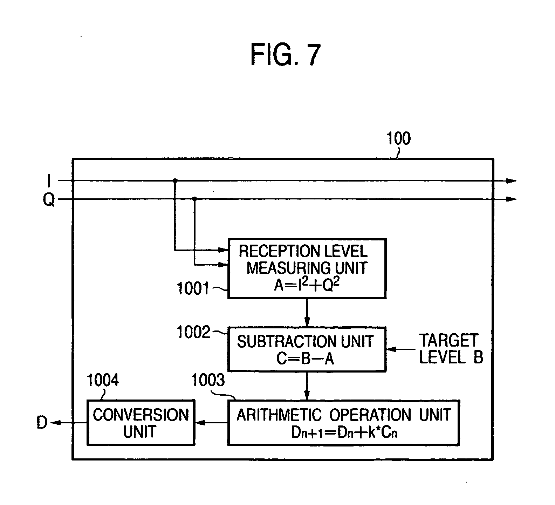

Next, the AGC control unit 100 will be explained. Fig. 7 is a block diagram showing an internal structure of the AGC processing unit 100 included in the related communication apparatus. As shown in the figure, the AGC processing unit 100 includes a reception level measuring unit 1001, a subtraction unit 1002, an arithmetic operation unit 1003, and a conversion unit 1004. The reception level measuring unit 1001 measures a reception level from base band signals of an I component and a Q component obtained by subjecting a received signal to the quadrature demodulation with the quadrature demodulator 6. Note that a reception level A is obtained according to an expression "A=I²+Q²".

The subtraction unit 1002 subtracts the reception level A obtained by the reception level measuring unit 1001 from a target level B to obtain a subtraction value C(=B-A). The arithmetic operation unit 1003 obtains a gain set value, which is indicated by a signal for adjusting a gain of the variable gain amplifier 5 (hereinafter referred to as "gain adjustment signal"), according to an arithmetic operation. More specifically, an n+1^{st} gain set value Dn+1 is obtained from an nth gain set value Dn, an update coefficient k (0<k<1), and an nth subtraction value Cn obtained from the subtraction unit 1002 according to an arithmetic expression Dn+1=Dn+k×Cn.

The conversion unit 1004 is a unit for fitting the gain set value D obtained by the arithmetic operation unit 1003 to a format of DA converters 9 in the later stage. In other words, the conversion unit 1004 generates a gain adjustment signal from the gain set value D. The gain adjustment signal outputted from the AGC processing unit 100 is subjected to DA conversion by the DA converters 9 and, then, supplied to the variable gain amplifier 5. A gain of the variable gain amplifier 5 is adjusted in accordance with the gain adjustment signal supplied in this way. Note that the adjustment for a gain is referred to as "AGC control (Automatic Gain Control)" in this specification.

However, in the related communication apparatus, an object of the diversity processing in the diversity processing unit 13 is output levels of the FFT processing units 12, that is, output levels of the AGC processing units 100a and 100b, which do not depend on an SIN ratio of the first branch and the second branch. Thus, there is a problem in that an SIN ratio of signals subjected to the diversity processing is not always satisfactory.

The invention has been devised in view of the related problems and it is an object of the invention to provide a communication apparatus that can perform gain control without deteriorating an S/N ratio of signals after the diversity processing.

### <Disclosure of the Invention>

In order to attain the object, a communication apparatus according to the invention is a communication apparatus comprising a diversity structure formed by a plurality of branches, each of the branches including: a signal amplifying unit that amplifies a reception signal and is changeable a gain of the reception signal; and a gain set value calculating unit that measure a reception level of the reception signal amplified by the signal amplifying unit and calculate a gain set value for adjusting the gain of the signal amplifying unit on the basis of the reception level. The branches share a gain set value selecting unit that compares the gain set values calculated by the gain set value calculating units of the respective branches to select a predetermined gain set value, and supplies the predetermined gain set value to the signal amplifying units of the respective branches.

Since the gain set value supplied to the signal amplifying units of the respective branches is shared by the branches in this way, a magnitude relation at the time of reception is maintained in the reception levels of the reception signals measured by the gain set value calculating units. Therefore, it is possible to perform gain control without deteriorating an S/N ratio of signals after diversity processing. As a result, a reception characteristic of the communication apparatus is made satisfactory.

In the communication apparatus according to the invention, the gain set value selecting unit selects a minimum gain set value among the gain set values calculated by the gain set value calculating units of the respective branches. Therefore, it is possible to control waveform distortion of the signals amplified by the signal amplifying units.

In the communication apparatus according to the invention, the each of the branches includes a Fourier transform unit that Fourier transforms the reception signal amplified by the signal amplifying unit into a frequency component. The branches share a diversity processing unit that applies diversity processing to the signals outputted from the Fourier transform units of the respective branches; and a diversity processing control unit that compares an absolute value of a difference of the gain set values calculated by the gain set value calculating units of the respective branches and a predetermined threshold value, and outputs a predetermined signal to the diversity processing unit when the absolute value of the difference is greater than the threshold value. When the diversity processing unit receives the predetermined signal, the diversity processing unit outputs a signal of the branch having the minimum gain set value without performing the diversity processing.

In this way, when input levels in the respective branches are different significantly, the diversity processing unit outputs a signal of the branch having a larger input level without performing the diversity processing. Thus, a magnitude relation at the time of reception is maintained in the reception levels of the reception signals. Therefore, it is possible to perform gain control without deteriorating an S/N ratio of signals after the diversity processing. As a result, a reception characteristic of the communication apparatus is made satisfactory.

In the communication apparatus according to the invention, in the diversity processing, the diversity processing unit compares amplitudes of the signals outputted from the Fourier transform units of the respective branches for each frequency, and selects a maximum amplitude for each frequency to output the signal.

Moreover, a program according to the invention realizes a computer as the respective units included in the communication apparatus according to any one of claims 1 to 5.

### <Brief Description of the Drawings>

Fig. 1 is a block diagram showing a communication apparatus in an embodiment according to the invention;
Fig. 2 is a block diagram showing an internal structure of an AGC processing unit;
Fig. 3 is a block diagram showing an internal structure of a comparison unit;
Fig. 4 is a block diagram showing a related communication apparatus;
Fig. 5 is a frequency characteristic chart explaining an example of selection diversity;
Fig. 6 is a frequency characteristic chart explaining an example of combining diversity; and
Fig. 7 is a block diagram showing an internal structure of an AGC processing unit included in the related communication apparatus.

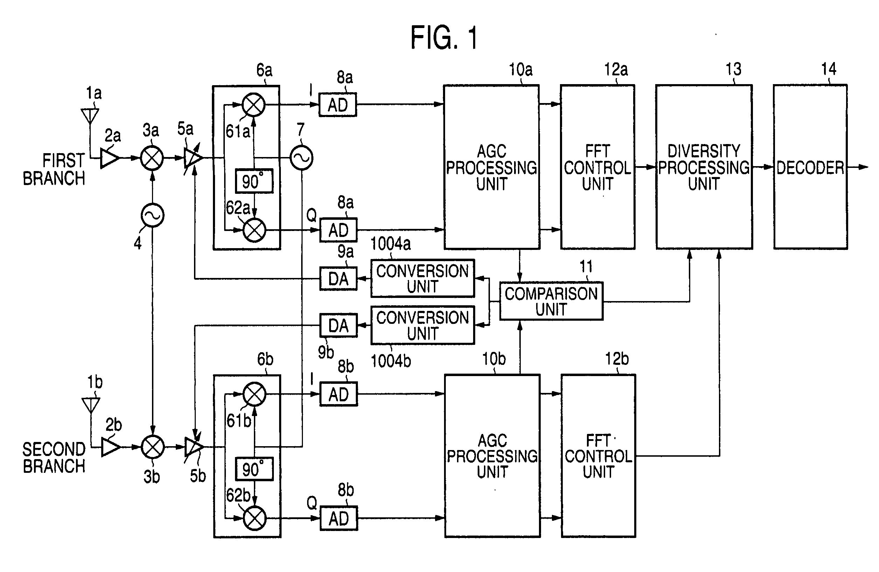

Note that, reference numerals and signs in the figures 1a and 1b denote antennas; 2a and 2b, low noise amplifiers (LNAs); 3a and 3b, mixers; 4a and 4b, local oscillators; 5a and 5b, variable gain amplifiers; 6a and 6b, quadrature demodulators; 61 a, 62a, 61 b, and 62b, mixers; 7, a local oscillator; 8a and 8b, AD converters; 9a and 9b, DA converters; 10a and 10b, AGC processing units; 11, a comparison unit; 12, FFT processing units; 13, a diversity processing unit; 14, a decoder; 1001, a reception level measuring unit; 1002, a subtraction unit; 1003, an arithmetic operation unit; and 1004a and 1004b, conversion units.

### <Best Mode for carrying out the Invention>

An embodiment of a communication apparatus according to the invention will be hereinafter explained with reference to the drawings. Fig. 1 is a block diagram showing a communication apparatus in an embodiment according to the invention. In the figure, components repeating those in Fig. 4 (related technique) are denoted by the identical reference numerals and signs. Note that the communication apparatus in this embodiment has a diversity structure formed by two branches, a first branch and a second branch, and adopts an OFDM (Orthogonal Frequency Division Multiplexing) system as a multiplexing system. Note that, in Fig. 1, a sign "a" is affixed to components belonging to the first branch and a sign "b" is affixed to components belonging to the second branch. Components shared by the first branch and the second branch will be hereinafter collectively represented. For example, antennas 1a and 1b are collectively represented as antennas 1.

As shown in Fig. 1, the mixers 3 and the variable gain amplifiers 5, which correspond to a signal amplifying unit, are sequentially connected to the antennas 1 via the low noise amplifiers (LNAs) 2. The mixers 3 function to mix local frequencies from the local oscillator 4 and input frequencies from the antennas 1. The quadrature demodulators 6 are connected to the variable gain amplifiers 5.

The quadrature demodulators 6 include mixers 61 that mix local frequencies from the local oscillator 7 and output frequencies of the variable gain amplifiers 5 and extract base band signals of an I component (an in-phase component) and mixers 62 that mix local frequencies, which are obtained by shifting phases of local signals from the local oscillator 7 by 90°, and the output frequencies of the variable gain amplifiers 5 and extract base band signals of a Q component (a quadrature component). The respective mixers 61 and 62 are connected to the decoder 14 via AD converters 8, AGC processing units 10 serving as a gain set value calculating unit, the FFT processing units 12 serving as a Fourier transform unit, and the diversity processing unit 13 serving as a diversity processing unit.

On the other hand, a comparison unit 11 serving as a gain set value selecting unit and a diversity processing control unit, which compares respective signals (signals from an AGC processing unit 10a and signals from an AGC processing unit 10b) outputted to the FFT processing units 12, is connected to the AGC processing units 10. A result of the comparison by the comparison unit 11 is inputted to the variable gain amplifiers 5 via the conversion units 1004 and the DA converters 9 and is also inputted to the diversity processing unit 13. Among the components explained above, the local oscillator 4, the local oscillator 7, the comparison unit 11, the diversity processing unit 13, and the decoder 14 are shared by the first branch and the second branch.

In the communication apparatus having the structure described above, signals received by the antennas 1 are amplified by the LNAs 2 and, then, subjected to frequency conversion by the mixers 3 in the respective branches. The signals subjected to the frequency conversion is controlled to have a fixed output level by the variable gain amplifiers 5 and converted into IQ base band signals by the quadrature demodulators 6. The IQ base band signals are converted into digital signals by the AD converters 8 and, then, converted into frequency components by the FFT control units 12. The diversity processing unit 13 compares the signals from the respective branches for each frequency and performs processing such as selection diversity for selecting a maximum amplitude for each frequency and combining diversity for performing vector synthesis for each frequency.

Fig. 5 shows an example of the selection diversity. When complex signal components of the first branch are 1+8i, 4-9i, and 5+2i and complex signal components of the second branch are -2+7i, 3+0i, and 6-i at frequencies f1, f2, and f3, the diversity processing unit 13 compares the amplitudes in the first branch and the second branch and selects complex signal components with larger amplitudes. In this case, outputs of the diversity processing unit 13 are 1 +8i, 4-9i, and 6-i at the frequencies f1, f2, and f3.

Fig. 6 shows an example of the combining diversity. As in Fig. 5, when complex signal components of the first branch are 1+8i, 4-9i, and 5+2i and complex signal components of the second branch are -2+7i, 3+0i, and 6-i at the frequencies f1, f2, and f3, the diversity processing unit 13 subjects signals of the first branch and the second branch to vector synthesis. In this case, outputs of the diversity processing unit 13 are -1+15i, 7-9i, and 11+i at the frequencies f1, f2, and f3. The respective signals subjected to the diversity processing by the diversity processing unit 13 in this way are inputted to the decoder 14 and decoded.

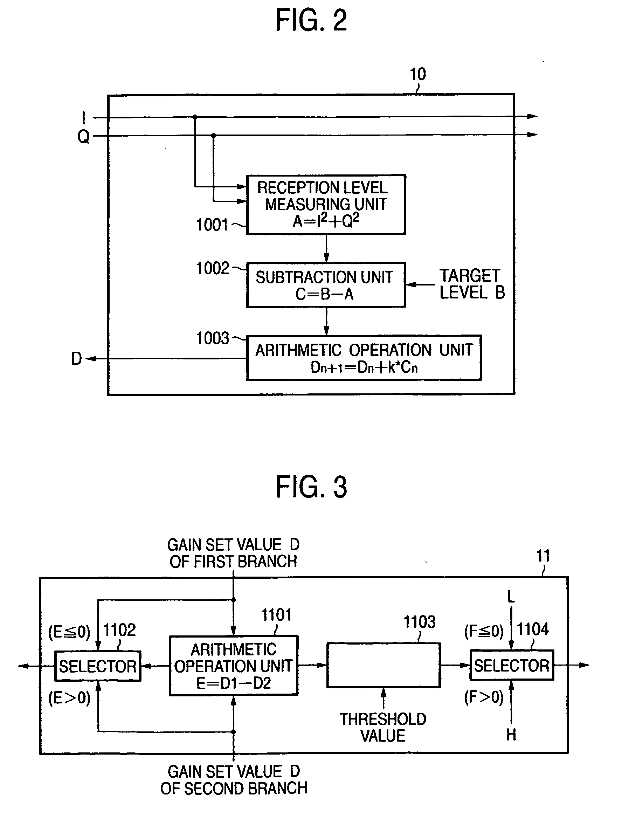

Next, the AGC control unit 10 will be explained. Fig. 2 is a block diagram showing an internal structure of the AGC processing unit 10. In the figure, again, components repeating those in Fig. 7 (related technique) are denoted by the identical reference numerals. The AGC processing unit 10 in this embodiment includes the reception level measuring unit 1001, the subtraction unit 1002, and the arithmetic operation unit 1003 but does not include the conversion unit 1004 shown in Fig. 7. The reception level measuring unit 1001 measures a reception level from base band signals of an I component and a Q component obtained by subjecting a received signal to the quadrature demodulation by the quadrature demodulator 6. Note that a reception level A is obtained according to an expression "A=I²+Q²".

The subtraction unit 1002 subtracts the reception level A obtained by the reception level measuring unit 1001 from a target level B to obtain a subtraction value C(=B-A). The arithmetic operation unit 1003 obtains a gain set value, which is indicated by a signal for adjusting a gain of the variable gain amplifier 5 (hereinafter referred to as "gain adjustment signal"), according to an arithmetic operation. More specifically, an n+1^{st} gain set value Dn+1 is obtained from an nth gain set value Dn, an update coefficient k (0<k<1), and an nth subtraction value Cn obtained from the subtraction unit 1002 according to an arithmetic expression Dn+1=Dn+k×Cn. The arithmetic operation value Dn+1 obtained by the AGC processing unit 10 is outputted to the comparison unit 11.

Next, the comparison unit 11 will be explained with reference to Fig. 3. Fig. 3 is a block diagram showing an internal structure of the comparison unit 11. The comparison unit 11 includes an arithmetic operation unit 1101, a selector 1102, an arithmetic operation unit 1103, and a selector 1104. When it is assumed that a gain set value D of the first branch is D1 and a gain set value of the second branch is D2, the arithmetic operation unit 1101 subtracts D2 from D1 to obtain a value E (=D1-D2).

The gain set value D1 of the first branch, the gain set value D2 of the second branch, and the output E of the arithmetic operation unit 1101 are inputted to the selector 1102. The selector 1102 outputs D1 in the case of E≤0 and outputs D2 in the case of E>0. Note that the output of the selector 1102 is inputted to the conversion unit 1004. The conversion unit 1004 in this embodiment is a unit for fitting the gain set value D obtained from the arithmetic operation unit 1003 to a format of the DA converters 9 in the later stage. In other words, the conversion unit 1004 generates a gain adjustment signal from the gain set value D. The gain set value D outputted from the comparison unit 11 is subjected to DA conversion by the DA converters 9 and, then, supplied to the variable gain amplifiers 5.

The arithmetic operation unit 1103 subtracts a predetermined threshold value from an absolute value of E obtained by the arithmetic operation unit 1101 to obtain a subtraction value F (=|E|-threshold value). An L (Low) signal, an H (High) signal, and an output F of the arithmetic operation unit 1103 are inputted to the selector 1104. The selector 1104 outputs the L signal in the case of F≤0 and outputs the H signal in the case of F>0. Note that the output of the selector 1104 is inputted to the diversity processing unit 13. If the H signal is inputted from the comparison unit 11, the diversity processing unit 13 in this embodiment outputs a signal of the branch having a minimum gain set value without performing the diversity processing.

As explained above, according to the communication apparatus in this embodiment, the comparison unit 11 is provided and the gain set value D supplied to the variable gain amplifiers 5 are shared by the variable gain amplifiers 5. Thus, a magnitude relation at the time of antenna input is maintained in output levels of the AGC processing units 10a and 10b. In addition, since a gain set value, which is minimum among the gain set values D outputted from the respective branches, is selected, it is possible to control distortion of an output waveform of the AGC processing unit 10. Moreover, when input levels in the respective branches increase, the diversity processing unit 13 outputs a signal of the branch having a larger input level without performing the diversity processing. Thus, a magnitude relation at the time of antenna input is maintained in output levels of the AGC processing units 10a and 10b. Therefore, it is possible to perform AGC control without deteriorating an S/N ratio of signals after the diversity processing. As a result, a reception characteristic of the communication apparatus is made satisfactory.

Note that the communication apparatus according to the invention is not limited to the embodiment explained above and can be carried out in various modifications in a range not departing from the gist of the invention.

The invention has been explained in detail with reference to the specific embodiment. However, it is evident for those skilled in the art that it is possible to apply various alterations and corrections to the invention without departing from the spirit and the scope of the invention.

This application is based on Japanese Patent Application No. 2002-309830 filed on October 24, 2002 and contents of the application is incorporated herein by reference.

### <Industrial Applicability>

As explained above, according to the communication apparatus in the invention, it is possible to perform gain control without deteriorating an S/N ratio of signals after the diversity processing. Thus, it is possible to provide a communication apparatus having a satisfactory reception characteristic.

## Claims

1. A communication apparatus, comprising a diversity structure formed by a plurality of branches,
wherein each of the branches includes:
a signal amplifying unit that amplifies a reception signal and is changeable a gain of the reception signal; and
a gain set value calculating unit that measure a reception level of the reception signal amplified by the signal amplifying unit and calculate a gain set value for adjusting the gain of the signal amplifying unit on the basis of the reception level; and
wherein the branches share a gain set value selecting unit that compares the gain set values calculated by the gain set value calculating units of the respective branches to select a predetermined gain set value, and supplies the predetermined gain set value to the signal amplifying units of the respective branches.

2. The communication apparatus as set forth in claim 1, wherein the gain set value selecting unit selects a minimum gain set value among the gain set values calculated by the gain set value calculating units of the respective branches.

3. The communication apparatus as set forth in claim 1 or 2, wherein the each of the branches includes a Fourier transform unit that Fourier transforms the reception signal amplified by the signal amplifying unit into a frequency component; and
wherein the branches share:
a diversity processing unit that applies diversity processing to the signals outputted from the Fourier transform units of the respective branches; and
a diversity processing control unit that compares an absolute value of a difference of the gain set values calculated by the gain set value calculating units of the respective branches and a predetermined threshold value, and outputs a predetermined signal to the diversity processing unit when the absolute value of the difference is greater than the threshold value; and
wherein when the diversity processing unit receives the predetermined signal, the diversity processing unit outputs a signal of the branch having the minimum gain set value without performing the diversity processing.

4. The communication apparatus as set forth in claim 3, wherein, in the diversity processing, the diversity processing unit compares amplitudes of the signals outputted from the Fourier transform units of the respective branches for each frequency, and selects a maximum amplitude for each frequency to output the signal.

5. The communication apparatus as set forth in claim 3, wherein, in the diversity processing, the diversity processing unit subjects amplitudes and phases of the signals outputted from the Fourier transform units of the respective branches to vector synthesis for each frequency to output the signal.

6. A program for realizing a computer as the respective units included in the communication apparatus according to any one of claims 1 to 5.
